# EUROPÄISCHE PATENTSCHRIFT

(11) **EP 1 987 114 B1**
(45) Veröffentlichungstag und Bekanntmachung des Hinweises auf die Patenterteilung: **14.11.2018**
(21) Anmeldenummer: 07712243.0
(22) Anmeldetag: 19.02.2007
(51) Int. Cl.: C09K 11/77

(54) **LEUCHTSTOFF UND LICHTQUELLE MIT DERARTIGEM LEUCHSTSTOFF SOWIE HERSTELLVERFAHREN FÜR DEN LEUCHTSTOFF**
ILLUMINANT AND LIGHT SOURCE CONTAINING THE SAME, AND METHOD FOR PRODUCING SAID ILLUMINANT
SUBSTANCE LUMINESCENTE, SOURCE LUMINEUSE RENFERMANT CETTE SUBSTANCE LUMINESCENTE ET PROCÉDÉ DE PRODUCTION DE LADITE SUBSTANCE LUMINESCENTE

(30) Priorität: 22.02.2006 DE 102006008300
(43) Veröffentlichungstag der Anmeldung: 05.11.2008
(60) Teilanmeldung: 11150894.1
(73) Patentinhaber: OSRAM GmbH, 80807 München (DE)
(72) Erfinder: BECKER, Daniel, 86199 Augsburg (DE); FIEDLER, Tim, 81377 München (DE); HEMPEL, Wolfram, D-71397 Leutenbach (DE); JERMANN, Frank, 86343 Königsbrunn (DE)
(74) Vertreter: Epping - Hermann - Fischer
(86) Internationale Anmeldenummer: PCT/EP2007/051569
(87) Internationale Veröffentlichungsnummer: WO 2007/096333

(56) Entgegenhaltungen:
- EP-A- 1 571 194
- WO-A2-2005/031797
- US-B1- 6 717 353
- H.T. HINTZEN ET.AL.: "Luminescence properties of Eu2+ activated alkaline-earth silicon-oxynitride MSi2O2-dN2+2/3d (M=Ca, Sr, Ba): a promising class of novel LED conversion phosphors" CHEM. MATER., Bd. 17, 2005, Seiten 3242-3248, XP002432168

## Beschreibung

### Technisches Gebiet

Die Erfindung geht aus von einem Oxinitrid-Leuchtstoff und betrifft außerdem eine Lichtquelle, insbesondere LED, mit einem derartigen Leuchtstoff. Der Leuchtstoff gehört der Klasse der Sione an. Die Erfindung betrifft ferner ein Herstellverfahren für einen derartigen Leuchtstoff.

### Stand der Technik

Die WO-A 2005/030905 beschreibt einen Leuchtstoff und ein Herstellverfahren für ein Misch-Sion, der ein Oxinitridosilikat der Formel MSi₂O₂N₂ (M = Ca, Sr, Ba) darstellt, das mit zweiwertigem Eu aktiviert ist, unter evtl. weiterer Zugabe von Mn als Koaktivator, wobei der Leuchtstoff überwiegend oder allein, also zu mehr als 50 % des Leuchtstoffs, bevorzugt zu mehr als 85 % des Leuchtstoffs, aus einer HT-Phase besteht. Diese HT-Modifikation zeichnet sich gegenüber der NT-Phase dadurch aus, dass sie breitbandig anregbar ist, nämlich in einem weiten Bereich von 50 bis 480 nm, insbesondere 150 bis 480 nm, besonders bevorzugt von 250 bis 470 nm, dass er eine extrem hohe Stabilität gegen äußere Einflüsse besitzt, also bei 150°C an Luft keine messbare Degradation zeigt, und dass er eine extrem gute Farbortstabilität unter wechselnden Bedingungen zeigt. Weitere Pluspunkte sind seine geringe Absorption im Roten, was besonders bei Leuchtstoffmischungen vorteilhaft ist. Ein Überwiegen der HT-Modifikation ist u.a. daran erkennbar, dass der kennzeichnende Peak der NT-Modifikation im XRD-Spektrum bei etwa 28,2 ° eine Intensität von weniger als 1:1, bevorzugt weniger als 1:2, im Vergleich zum Peak mit höchster Intensität aus der Dreiergruppe der Reflexe der HT-Modifikation, die im XRD-Spektrum bei 25 bis 27° liegen, aufweist.

Die WO-A 2004/039915 offenbart einen Leuchtstoff und eine Lichtquelle mit einer Kristallstruktur im orthorhombischen System. Das Sion hat die Stöchiometrie MSi2O2N2:Eu. Es ist beispielsweise ein Misch-Sion mit M = (Sr,Ba), wobei bevorzugt das molare Verhältnis Sr:Ba bei 6:4 bis 9:1 liegt.

Die EP 1571194 A1 offenbart Oxinitrid Leuchtstoffe, Verfahren zur deren Herstellung und lumineszierende Bauelementen enthaltend einen Oxinitrid Leuchtstoff.

Die WO 2005/031797 A2 offenbart eine weiß emittierende LED mit definierter Farbtemperatur.

### Darstellung der Erfindung

Es ist Aufgabe der vorliegenden Erfindung, einen Leuchtstoff gemäß dem Oberbegriff des Anspruchs 1 bereitzustellen, dessen Effizienz möglichst hoch ist. Eine weitere Aufgabe ist es, eine Lichtquelle mit diesem Leuchtstoff sowie eine Verfahren zur Herstellung dieses effektiven Leuchtstoffs anzugeben.

Diese Aufgaben werden durch die kennzeichnenden Merkmale des Anspruchs 1, 5 und 6 gelöst. Besonders vorteilhafte Ausgestaltungen finden sich in den abhängigen Ansprüchen.

Bisher gibt es keinen gelb emittierenden Leuchtstoff hoher Effizienz, der gleichzeitig unempfindlich gegen äußere Einflüsse ist und außerdem durch Blau- bzw. UV-Strahlung, insbesondere durch Primärstrahlung von LEDs, gut anregbar ist. Da der erfindungsgemäße Leuchtstoff sowohl durch Blau- als auch durch UV-Strahlung, gut anregbar ist, eignet er sich auch für andere Lichtquelle, bei denen eine Anregung in diesem Spektralbereich möglich ist, wie beispielsweise Hg-Niederdruck-Leuchtstofflampen, als Verschiebepigment in Verbindung mit blau-grünen elektrolumineszenten Leuchtstoffen oder auch im Zusammenhang mit Lampen, die Molekularstrahlung von Metalliodiden wie Indiumiodid verwenden.

Es wird ein hocheffizienter Leuchtstoff aus der Klasse der Oxinitridosilikate mit einem Kation M2+ und der grundsätzlichen Formel M_{(1-c)}Si₂O₂N₂:D_{c} angegeben, wobei M2+ als Bestandteil Sr2+ und Ba2+ gleichzeitig enthält, und wobei D eine zweiwertige Dotierung mit zumindest Europium ist. Der Leuchtstoff ist dadurch gekennzeichnet, dass für M = Sr₍₁₋ₓ₎Baₓ mit 0,45 ≤ x ≤ 0,55 verwendet wird, wobei das Oxinitridosilikat vollständig oder überwiegend aus einer Phase besteht, die weder der von reinem Sr-Sion noch der von reinem Ba-Sion entspricht, wobei die Dominanzwellenlänge des Misch-Sions bei gegebenem Dotiergehalt um mindestens 6 nm, bevorzugt um mindestens 8 nm, gegenüber der Dominanzwellenlänge des reinen Sr-Sions mit gleichem Dotiergehalt zu längeren Wellenlängen hin verschoben ist, wobei der Anteil c des Eu am Kation M2+ mindestens 5 Mol.-% ausmacht.

Ferner wird ein Verfahren zur Herstellung eines solchen Leuchtstoffs angegeben. Dieses ist dadurch gekennzeichnet, dass in einem ersten Schritt Carbonate von Sr und von Ba zusammen mit SiO2 und einem Flussmittel sowie einem Eu-Vorläufer intensiv gemischt werden und daraus ein Orthosilikat synthetisiert wird, und dass dieses Orthosilikat anschließend in einem zweiten Schritt mit Si3N4 gemischt wird und dieses Gemisch anschließend in leicht reduzierender Atmosphäre geglüht wird.

Es wird zudem eine Lichtquelle mit Primärstrahlung angegeben, die von einem solchen Leuchtstoff ganz oder teilweise in längerwellige Strahlung umgewandelt wird.

Ausgangspunkt der neuen Erfindung ist die überraschende Erkenntnis, dass es eine weitere Phase des Sion-Leuchtstoffs gibt, die nur in der Mischung zwischen Sr-Ba, aber nicht im reinen Sr-Sion und Ba-Sion auftritt. Sie verhält sich anders und zeigt andere XRD-Reflexe als die bisher bekannten Sione. Kennzeichnendes Merkmal dieser neuen Phase ist, dass die Dominanzwellenlänge nicht, wie eigentlich zu erwarten, zwischen der des Sr-Sions und der des Ba-Sions, bezogen auf einen gegebenen Eu-Dotiergehalt, sondern überraschenderweise deutlich langwelliger als die Dominanzwellenlänge des entsprechenden Sr-Sion ist, nämlich um mindestens 6 nm zu längeren Wellenlängen hin verschoben. Typisch ist eine Verschiebung von 8 bis 10 nm. Die Phase lässt sich darstellen als M_{1-c}Si2O2N2:Eu_{c} mit M = Sr₁₋ₓBaₓ.

Auch offenbart ist, dass das Misch-Sion so gewählt ist, dass 0,42 ≤ x ≤ 0,70. Erfindungsgemäß gilt 0,45 ≤ x ≤ 0,55.
Dabei werden die besten Ergebnisse mit relativ hohem Gehalt an dem Dotierstoff erzielt. In aller Regel ist der aktivierende Dotierstoff allein oder weit überwiegend Europium. Der Anteil c des Eu sollte bevorzugt zwischen 5 bis 12 mol-% von M ausmachen. Auch offenbart wird ein Anteil c des Eu zwischen 0,1 und 20 mol-% von M.

Der neue Leuchtstoff zeichnet sich im Röntgenbeugungsdiffraktogramm (XRD-Spektrum) durch ein völlig anderes Reflexmuster als die bekannten Sione aus. Dabei ist nicht ausgeschlossen, dass auch andere Metalle in kleineren Mengen eine mindestens ternäre Verbindung für das Wirtsgitter des Misch-Sions aufbauen, die außer Sr und Ba auch andere zweiwertige Metallionen, insbesondere Ca, Mg, Zn und Mn, enthalten. Diese zeigen eine ähnliche Struktur wie das neue Misch-Sion, was an den gleichartigen Reflexen des Röntgenbeugungsdiffraktogramms erkennbar ist.

Auffällig ist, dass der intensitätsstärkste Reflex des neuen Leuchtstoffs ein Doppelpeak ist, der gegenüber dem intensitätsstärksten XRD-Reflex von Sr-Sion, der bei Anregung durch Cu Kα bei etwa 31,6° liegt, zu kürzeren Winkeln hin verschoben ist. Es zeigt sich dabei in hoher Auflösung ein Doppelpeak mit Maxima bei etwa 29,8 und 31,3°. Auffällig ist ferner u.a., daß eine Gruppe von drei Reflexen im Röntgenbeugungsdiffraktogramm zwischen 52° und 58° auftritt, die bei normalen Sionen nicht vorhanden ist.

Eine mögliche Ursache für das Auftreten der neuen Phase, bei geeignetem Herstellverfahren, ist die sorgfältige Wahl der mittleren Ionengröße des Ions M²⁺. Sobald der mittlere Ionenradius eine kritische Größe unterschreitet, verschwindet eine blaue Bande, die von der reinen Ba-Sion-Phase wie oben diskutiert emittiert wird, nahezu vollständig. Dies kann bevorzugt erreicht werden durch gezielte Veränderung des Ba-Sr-Verhältnisses.

Beispielsweise bildet sich bei einem mittleren Ionenradius des Ions M2+ von höchstens 0,13 nm diese völlig neue Phase, die es so binär offenbar nur im Misch-Sion aus Sr und Ba gibt. Sie hat ein anderes Emissionsspektrum, bei der die blaue Bande keine Rolle spielt. In dieser Phase hängt die Lage der Emissionsbande sehr stark vom Dotiergehalt ab. Mit zunehmendem Gehalt an Eu verschiebt sich die Emission ausgeprägt langwellig.

Die neue Phase lässt sich beispielsweise gemäß folgender Vorschrift herstellen:
Angesetzt werden die Carbonate der Metalle M, insbesondere die Carbonate von Sr und Ba. Sie werden mit SiO2, Si3N4, Eu2O3 gemischt. Bewährt hat sich die Verwendung eines halogenidhaltigen Flussmittels wie insbesondere SrF2, BaF2, SrCl2 oder NH4F oder NH4HF2. Außerdem ist als Flussmittel insbesondere auch Borsäure H3BO3 oder ein anderes gebräuchliches Flussmittel einsetzbar. Selbstverständlich können auch geeignete Mischungen verschiedener Flussmittel verwendet werden. Diese Ansatzmischungen reagieren unter einer Erhitzung auf 1350°C bis 1650 °C, insbesondere mindestens 1450 °C, in leicht reduzierender Atmosphäre, die bevorzugt zumindest eine der Komponenten wie Ar, N2, H2 bzw. Formiergas (N2/H2) enthält. Entscheidend dabei ist eine ausreichend gute Mischung der Sr- und Ba-Vorläufer. Abhängig von der Ansatzmsichung kann auch eine Washcung empfehlenswert sein, die insbesondere die Reinheit des Produkts verbessert.

Schmelzmittel (auch Flussmittel genannt) ermöglichen generell ein besseres Wachstum der Kristallite und erhöhen somit die Quanteneffizienz und die Absorption des Leuchtstoffs bei der Anregungswellenlänge. Es ist möglich, dass - wie bei anderen Leuchtstoffen auch - sehr geringe Mengen des Schmelzmittels (insbesondere der kleinen F-, Cl- und B-Ionen, die die Wirkung des Schmelzmittels bekannterweise ausmachen) im Leuchtstoff verbleiben.

Eine Waschung - vorzugsweise bei einem pH-Wert < 8 - nach der Glühung kann möglicherweise geringfügig vorhandene, wasserlösliche Fremdphasen (z. B. Orthosilikatphasen) und Schmelzmittelreste entfernen helfen und verbessert so die Leuchtstoffqualität.

Die erfindungsgemäße Herstellungsroute, die weniger empfindlich im Hinblick auf die Mischung der Sr-und Ba-Vorläufer ist, geht über Orthosilikate.

Die XRD-Linien der neuen Phase können orthorhombisch indiziert werden. Die neue Phase lässt sich jedoch keiner bekannten Phase zuordnen. Eine Untersuchung des Zellvolumens unter dieser Annahme liefert allerdings überraschende Ergebnisse. Bei einer Anpassung der Gitterparameter an die gemessenen Diffraktogramme unter der Annahme der orthorhombischen Elementarzelle zeigt sich, dass das Zellvolumen merkwürdigerweise mit steigendem Ba-Gehalt zunächst deutlich abnimmt, obwohl mit Ba2+ ein größeres Kation gegen das kleinere Sr2+ ausgetauscht wird. Im Bereich von 30 bis 58 mol-% Ba ändert sich dann das scheinbare Zellvolumen kaum, danach steigt es wieder an. Dies lässt sich am einfachsten dadurch erklären, dass die gewählte Elementarzelle eben nicht der physikalisch relevanten Elementarzelle entspricht. Unabhängig davon ist jedoch klar, dass es bei geeigneter Herstellung drei deutlich voneinander unterscheidbare Bereiche im Misch-Sion (Sr,Ba)-Sion gibt. Ein erster Bereich ist das bekannte Sr-dominierte Misch-Sion (etwa 70 bis 100 % Sr-Anteil), ein zweiter Bereich ist das bekannte Ba-dominierte Misch-Sion (etwa 70 bis 100 Ba-Anteil). Die neue Phase eines echten Misch-Sions tritt bei geeignet gewählten Herstellbedingungen im Bereich 30 bis 70 % Sr-Anteil, Rest Ba, auf. Besonders gut ausgeprägt ist die neue Phase im Bereich 30 bis 58 mol-% Ba, vor allem bei den erfindungsgemäßen 45 bis 55 mol-% Ba.

Die neue Phase bleibt auch erhalten, wenn man geringe Mengen anderer zweiwertiger Ionen hinzufügt. Bei Zugabe von Ca verschiebt sich der mögliche Ba-Anteil zu höheren Anteilen.

Der Befund einer neuen Phase wird dadurch gestützt, dass reines Sr-Sion grün emittiert und reines Ba-Sion sogar noch kurzwelliger emittiert, nämlich blaugrün. Dagegen emittiert das neue Misch-Sion gelb, also langwelliger als reines Sr-Sion.

Für Anwendungen bei weißen LEDs wird typisch ein Eu-Gehalt von 5 bis 20% gewählt, so dass die Dominanzwellenlänge des Leuchtstoff im gelben Spektralbereich bei mindestens 569 nm liegt. Typisch ist ein Wert von c = 0,1, also ein Eu-Anteil von 10% an M. Das entspricht einer Dominanzwellenlänge von etwa 573 nm.

Dadurch kann der bekannte gelbe Granatleuchtstoff YAG:Ce durch einen neuartigen Oxinitrid-Leuchtstoff Sr1-xBaxSi2O2N2:Eu mit 0,45 ≤ x ≤ 0,55, für gelbe Emission, ersetzt werden. Auch offenbart wird der Ersatz des bekannten gelben Granatleuchtstoff YAG:Ce durch einen Oxinitrid-Leuchtstoff Sr1-xBaxSi2O2N2:Eu mit 0.7 ≥ x ≥ 0.3, für gelbe Emission. Der Leuchtstoff besitzt in der Zusammensetzung mit x um 0.5 und 10 % Eu-Dotierung in etwa dieselbe Dominanzwellenlänge wie alternative Gelbleuchtstoffe (Granate, Orthosilikate). Der Leuchtstoff, dessen Emissionsbande überraschenderweise nicht zwischen Blaugrün (BaSi2O2N2:Eu) und Gelbgrün (SrSi2O2N2:Eu) liegt, sondern gegenüber beiden Verbindungen langwellig ins Gelbe verschoben ist, besitzt zwei wichtige Vorteile gegenüber dem Stand der Technik, wie er durch den Einsatz von Granatleuchtstofffen charakterisiert ist (Orthosilikate sind noch deutlich ineffizienter als YAG:Ce):
Erstens ist der visuelle Nutzeffekt je nach Verbindung 10-15% höher als bei vergleichbaren Granatleuchtstoffen. Und zweitens verringert sich der Konversionseffizienzverlust bei 150 °C von mindestens 20% im Fall von Granat-Leuchtstoffen auf etwa 7%.

Damit beträgt der potenzielle Effizienzvorteil bei einer weißen LED (Farbort x/y = 0.33/0.33) auf Basis des neuen Leuchtstoffs und einer 455 nm Primär-LED bei 150 °C ca. +20% im Vergleich zu einer YAG:Ce-basierten Lösung (x/y = 0.32/0.33). Der Effizienzvorteil erhöht sich bei kürzeren Anregungswellenlängen, da die Konversionseffizienz gegenüber YAG zunimmt.

Erstaunlicherweise entspricht das Röntgenbeugungsdiffraktogramm und damit die Struktur von SrBa-SiON weder der des Ba-SiONs noch der des Sr-SiONs. Beim SrBa-SiON werden deutlich weniger Linien im Röntgenbeugungsdiffraktogramm beobachtet als beim Sr-SiON, was belegt, dass es sich um eine höher symmetrische neue Phase handelt.

Bedingt durch immer weiter steigenden Leistungen der LEDs sowie immer breitere Anwendungsfelder werden in Zukunft LED-Temperaturen (Junction Temperatures) von über 150 °C erreicht. Bei diesen hohen Temperaturen setzt auch bei dem bisher effizientesten gelben Granatleuchtstoffen wie YAG:Ce bereits eine merkliche Temperaturlöschung der Lumineszenz ein (Thermal Quenching). Sie verlieren mindestens 20% ihrer Konversionseffizienz im Verhältnis zur Effizienz bei Raumtemperatur. Bisher wurde die LED-Temperatur durch aufwendige Kühlungsmaßnahmen, die vom Markt in vielen Fällen nicht toleriert werden und bei vielen Anwendungen aus Platzgründen nicht möglich sind, auf möglichst niedrigen Temperaturen gehalten. Das neue Misch-Sion bietet hier eine überlegene Lösung. Es kann aber auch für andere Lichtquellen eingesetzt werden, beispielsweise gewöhnliche Lampen wie Hochdruckentladungslampen und Leuchtstofflampen.

Die neue Mischphase kann auch mit anderen Phasen von Sionen, insbesondere Sr-Sion, gemischt werden.

Besonders überaschend ist, dass die neue Phase sogar effizienter als Granat-Leuchtstoffe sein kann und damit sogar YAG:Ce ersetzen kann.

Um die neue Phase möglichst rein zu erhalten, muss ein geeignetes Herstellverfahren angewendet werden. Dabei empfiehlt sich weniger die Synthese aus Nitriden, wie meist bisher angewendet, weil Nitride nicht besonders feinkörnig lieferbar sind. Um eine innige Mischung der Sr- und Ba-Vorläufer zu erreichen, ist es jedoch günstig, möglichst feinkörnige Sr- und Ba-Vorläufer zu verwenden, die ein maximales d50 (mit Sedigraph gemessen) von höchstens 5 pm, bevorzugt sogar höchstens 3 µm, besitzen. Gute Ergebnisse werden mit Vorläufern erzielt, die zwischen 1 und 2 µm als d50 aufweisen.

Am einfachsten läst sich das neue Sion über eine Orthosilikat-Route herstellen, aber auch eine geeignet modifzierte Synthese aus Carbonaten ist möglich, insbesondere unter Verwendung eines relativ hohen Anteils von Dotierstoffen. Besonders ein hoher Eu-Gehalt von mindestens 1%, vorteilhaft mindestens 5%, scheint die Ausbildung der neuen Phase zu begünstigen. Insbesondere ist die Strahlungsstabilität des neuen Misch-Sions höher als bei den vorbekannten Phasen.

Besonders geeignet ist der neue Leuchtstoff zum Einsatz bei weißen LEDs. Dabei kann ein x-Wert für Ba von 30 bis 70% eingesetzt werden, erfindungsgemäß 0,45 ≤ x ≤ 0,55 bei gleichzeitiger Verwendung eines relativ hohen Eu-Gehalts von mindestens 5 %. Er eignet sich sehr gut für die Anregung im Spektralbereich bei 440 bis 465 nm, besonders gut lässt sich damit die Anregung durch eine Peakwellenlänger der LED bei 440 bis 450 nm erzielen. Die Dominanzwellenlänge des Leuchtstoffs lässt sich dabei sehr gut auf einen Bereich zwischen 569 und 578 nm einstellen.

Die bisher effizientesten warmweißen High Brightness (HB) LEDs basieren auf einer Kombination eines Granatleuchtstoffs wie YAG:Ce und einem Nitridosilikat wie (Sr,Ca)2Si5N8:Eu. Bei Einsatz langwelliger blauer LEDs (∼460 nm) ist diese Lösung sehr gut. Es zeigt sich jedoch, dass es von Seiten der Chiptechnologie vorteilhaft ist, zu kürzeren Wellenlängen (440-450 nm) zu gehen. Bei diesen Wellenlängen erhöht sich der relative Rotleuchtstoffanteil und die Granatleuchtstoffe werden tendenziell weniger effizient. Durch den erhöhten Anteil der Eu2+-basierten Rotleuchtstoffe wird ein signifikanter Teil der Strahlung des Granatleuchtstoffs vom Rotleuchtstoff reabsorbiert, was die Effizienz weiter verschlechtert.

Bisher wurde versucht, bei Einsatz kürzerwelliger LEDs die Granatleuchtstoffe entsprechend anzupassen, z. B. durch partielle Substitution der Al3+ durch Ga3+ Ionen (YAGaG:Ce). Der Nachteil der breitbandigen Emission, die auf der kurzwelligen Seite stark durch den Rotleuchtstoff reabsorbiert wird, bleibt dabei jedoch erhalten. Andere Lösungen, wie gelbe Orthosilikate oder Thiogallate, die sehr schmalbandig emittieren, kommen aufgrund der mangelnden thermischen und chemischen Stabilität für einen Einsatz in HB-LEDs, die hohe Temperaturen erreichen können, nicht in Frage. Daher gibt es zur Zeit keine wirkliche Alternative zu breitbandig emittierenden, cerdotierten Granatleuchtstoffen.

Die Emission des Leuchtstoffs SrBa-SiON:Eu ist deutlich schmalbandiger und weist einen höheren visuellen Nutzeffekt auf als die der Granatleuchtstoffe. Außerdem steigt die Effizienz mit abnehmender LED-Wellenlänge. Im Gegensatz zu Orthosilikaten, die eine sehr ähnliche Emission aufweisen, ist das SrBa-SiON:Eu ein extrem temperaturstabiler Leuchtstoff und daher auch für den Einsatz in HB-LEDs bestens geeignet. Durch die Schmalbandigkeit des Leuchtstoffs wird bei gleicher dominanter Wellenlänge wesentlich weniger kurzwellige Strahlung in einem Spektralbereich emittiert, in dem Eu2+-basierte Rotleuchtstoffe wie beispielsweise die Nitridosilikate eine besonders hohe Absorption aufweisen. Eine besonders hohe Effizienz wird erreicht, durch Mischung des Sions mit einem relativ kurzwelligen Rotleuchtstoff wie Ca2Si5N8:Eu.

Da der neue Gelbleuchtstoff SrBa-SiON einen im Vergleich zu Granatleuchtstoffen sehr hohen visuellen Nutzeffekt bei gleichzeitig sehr hoher Konversionseffizienz aufweist und außerdem nur relativ schwach von Eu2+-basierten Rotleuchtstoffen absorbiert wird, lassen sich mit diesem Leuchtstoff in Kombination mit Rotleuchtstoffen, die einen hohen visuellen Nutzeffekt aufweisen, wie Ca2Si5N8:Eu oder auch Ca5Al4Si8N18:Eu und Varianten davon, äußerst effiziente LED mit niedrigen Farbtemperaturen realisieren. Bei Verwendung von primär bei 444 nm (Peak) emittierenden LEDs konnte selbst für eine Farbtemperatur von 3200 K, dem sogenantnetn Warmweiß, noch eine extrem hohe Effizienz in Höhe von ca. 80% der effizientesten LEDs für eine Farbtemperatur von 6000 K, dem sog. Tageslichtweiß, demonstriert werden. Die effizientesten bisher verfügbaren Lösungen für warmweiß sind deutlich weniger effizient, nämlich in der Größenordnung von ca. 5% und mehr dunkler.

### Kurze Beschreibung der Zeichnungen

Im Folgenden soll die Erfindung anhand mehrerer Ausführungsbeispiele näher erläutert werden. Die Figuren zeigen:
- Figur 1: Diffraktogramme verschiedener Sione des Typs MSi2O2N2:Eu;
- Figur 2: das Zellvolumen als Funktion des Sr- Gehalts;
- Figur 3, 4: jeweils einen Detailausschnitt des RöntgenDiffraktogramms verschiedener Misch-Sione;
- Figur 5: den Vergleich der Emission eines bekannten Orthosilikats mit dem neuartigen Misch-Sion;
- Figur 6: den Vergleich der Emission eines bekannten Granats mit dem neuartigen Misch-Sion;
- Figur 7: die Effizienz verschiedener Leuchtstoffe als Funktion der Umgebungstemperatur;
- Figur 8: die Verschiebung der Emissionsbande (Maximum) als Funktion des Sr-Gehalts;
- Figur 9: ein Vergleich der Emissionsspektren eines erfindungsgemäßen Misch-ions mit dem reiner Sione;

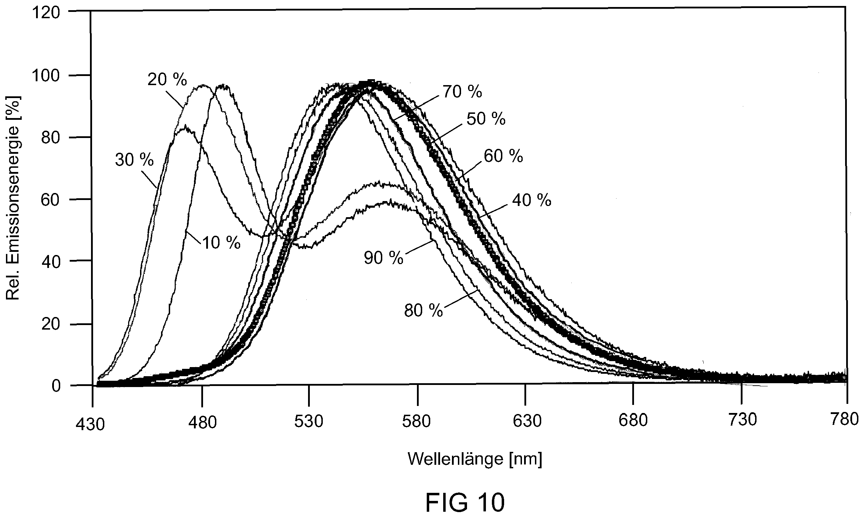

- Figur 10: Emissionsspektren weiterer Misch-Sione;
- Figur 11: ein Emissionsspektrum einer weißen LED unter Mitwirkung des neuartigen Leuchtstoffs.
- Figur 12: eine weiße LED;
- Figur 13: eine Lichtquelle, basierend auf LEDs;
- Figur 14: eine Lichtquelle, basierend auf einer Niederdrucklampe;
- Figur 15: einen Vergleich der Emission verschiedener Leuchtstoff-Systeme.

### Bevorzugte Ausführungsform der Erfindung

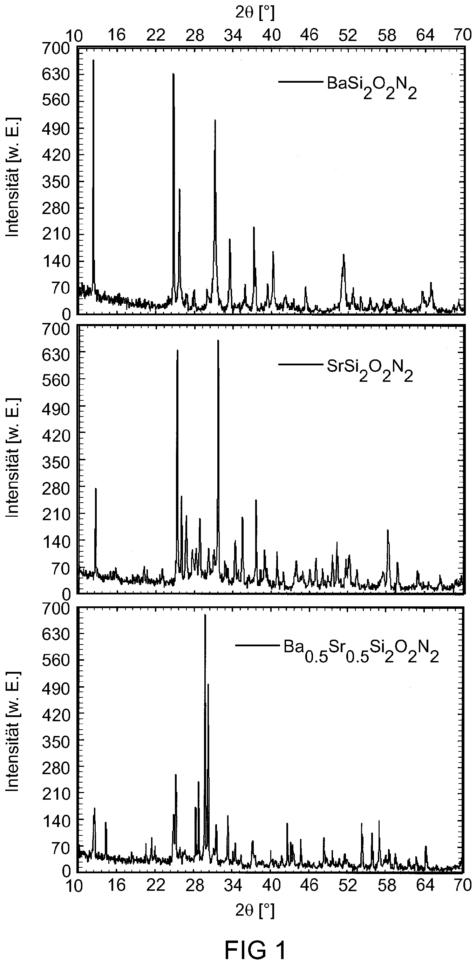

Figur 1 zeigt Röntgenpulver-Diffraktogramme von Eu-dotierten Leuchtstoffen des Typs Ba0,95Si2N2O2:Eu0,05 (oben), Sr0,9Si2N2O2:Eu0,1 (unten) und Ba0,45Sr0,45Si2N2O2:Eu0,1 (Mitte). Man erkennt, dass sich die Diffraktogramme deutlich voneinander unterschieden. Das Diffraktogramm von Sr-Sion enthält zwar noch die Peaks des Diffraktogramms von Ba-Sion (leicht verschoben aufgrund kleinerer Gitterparameter) ist aber linienreicher. Dies deutet auf eine Struktur mit niedrigerer Symmetrie hin. Das Reflexmuster von BaSr-Sion ist deutlich von dem der beiden Randphasen verschieden, d. h. es liegt keine Mischung der beiden reinen Randphasen vor.

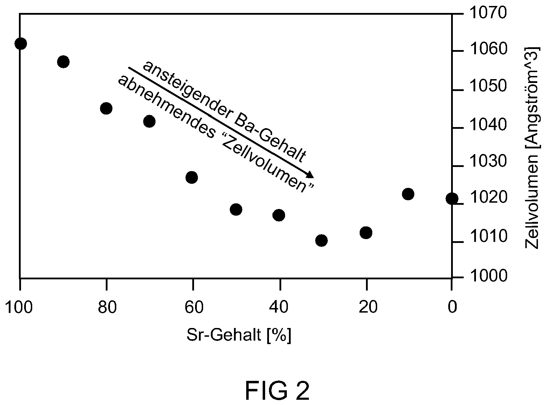

Figur 2 zeigt das Zellvolumen des Leuchtstoffs als Funktion des Sr-Gehalts beim System Sr-Ba, hergestellt über die Carbonat-Route. Dabei ist eine orthorhombische Elementarzelle angenommen. Die Anpassung der Gitterparameter an die gemessenen Diffraktogramme unter der Annahme, einer orthorhombischen Elementarzelle liefert ungewöhnliche Ergebnisse. Man erkennt, dass das scheinbare "Zellvolumen" überraschenderweise mit steigendem Ba-Gehalt zunächst deutlich abnimmt, obwohl mit Ba²⁺ ein größeres Kation vermehrt eingebaut wird. Im Bereich von 20 % bis 50 % Sr ändert sich das scheinbare "Zellvolumen" kaum; danach steigt es wieder an. Dies deutet darauf hin, dass die so gewählte Zelle nicht der physikalisch realen Elementarzelle entspricht. Trotzdem kann aus der Peakverschiebung gefolgert werden, dass es drei deutlich voneinander verschiedene Bereiche gibt: 0 - 10 % Sr, etwa 20 - 65% Sr und 70% - 100% Sr. Übergangsbereiche liegen bei 10 bis 20 % Sr und 65 bis 70% Sr.

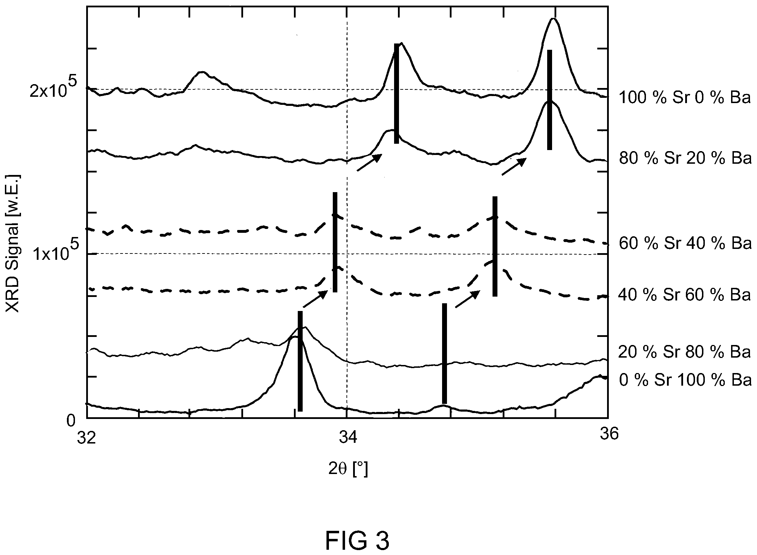

Figur 3 zeigt einen Detailausschnitt aus dem Röntgenbeugungsdiffraktogramm für verschiedene Misch-Sione im Bereich 32 bis 36° für den Winkel 2 Θ. Es ist eine Übersicht über sechs Proben mit unterschiedlichem Sr/Ba-Verhältnis gezeigt. Der Ba-Anteil nimmt von unten nach oben von Diffraktogramm zu Diffraktogramm jeweils um 20 % zu. (Der Eu-Anteil von 2 % wurde gleichmäßig auf beide "Plätze" verteilt.) Die Spektren werden in den folgenden Abbildungen bzgl. des Winkelbereichs aufgespreizt dargestellt, um die Unterschiede besser diskutieren zu können. Die markierten Reflexgruppen bleiben innerhalb einer Struktur mit steigendem Sr-Gehalt bei nahezu der gleichen Position. Die markierten Reflexgruppen bleiben innerhalb einer Struktur mit steigendem Sr-Gehalt bei nahezu der gleichen Position. Allerdings zeigt sich zweimal ein Sprung in Position und Intensität bei den Phasenübergängen von Ba-SiON zu SrBa-SiON und von SrBa-SiON zu Sr-SiON. Typischerweise erhält man ab ca. 35 % Sr eine neue, gelb emittierende SrBa-SiON-Phase, die sich mit zunehmendem Sr-Gehalt oberhalb von 60% Sr immer mehr verzerrt und kontinuierlich in die Sr-SiON-Phase übergeht. Die genauen Werte hängen von der Eu-Dotierung und von etwaigen zusätzlich eingebauten Kationen (z. B. Ca, Zn, Mg, Yb) ab.

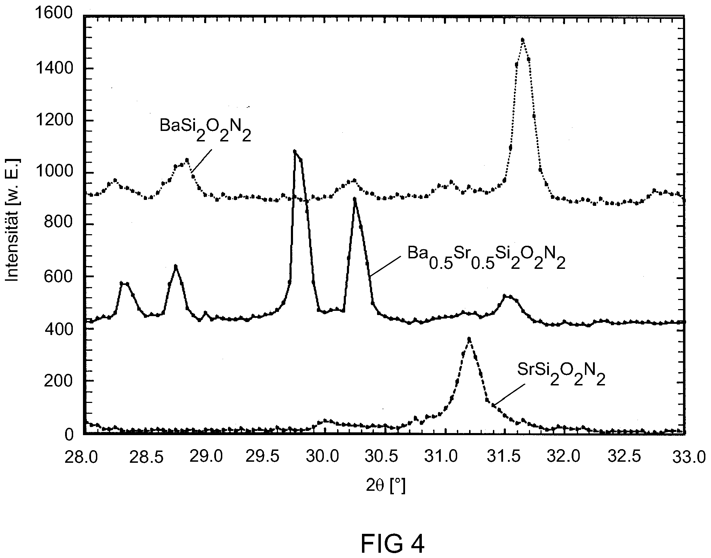

Figur 4 zeigt den intensitätsstärksten Peak von Sr-Ba-Misch-Sion in seiner Lage relativ zum intensitätsstärksten Peak des Sr-Sions und des Ba-Sions. Der intensitätsstärkste Peak des Misch-Sions liegt bei etwa 2 Θ = 31,2°. Es ist eigentlich ein Doppelpeak, der hier aufgrund schlechter Auflösung zusammenfällt. Dagegen ist der intensitätsstärkste Peak von Sr- und Ba-Sion bei deutlich höheren Wellenlängen von fast 2 Θ = 32° angesiedelt.

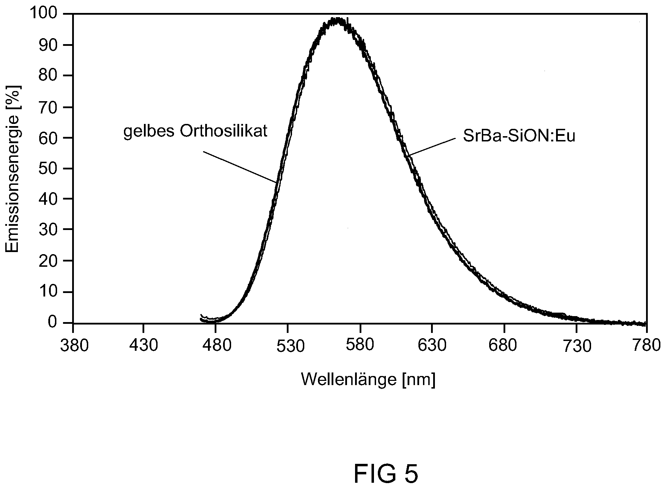

Figur 5 zeigt den Vergleich der Emissionsbande eines erfindungsgemäßen Leuchtstoffs vom Typ Misch-Sion mit einem gelben Orthosilikat aus dem Stand der Technik. Mit dem neuen SrBa-SiON:Eu lässt sich praktisch die gleiche spektrale Verteilung erreichen wie mit Orthosilikaten.

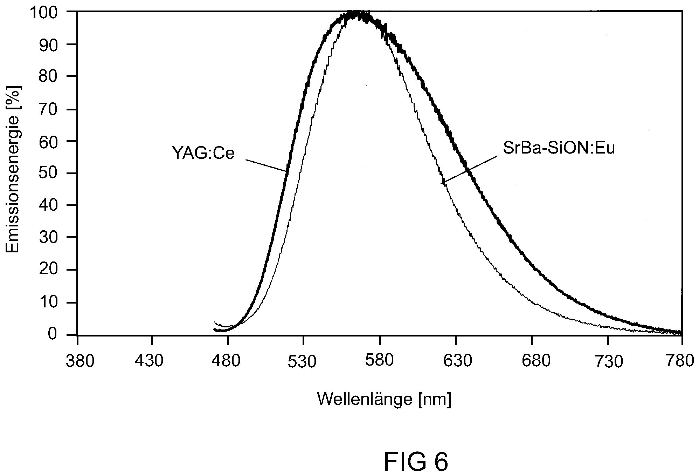

Figur 6 zeigt den Vergleich der Emissionsbande eines erfindungsgemäßen Leuchtstoffs vom Typ Misch-Sion mit einem gelben Granatleuchtstoff aus dem Stand der Technik. Die Emissionsbande ist bei nahezu gleicher Dominanzwellenlänge deutlich schmalbandiger. Der visuelle Nutzeffekt der Emissionsstrahlung ist daher signifikant höher, typisch um ca. 10%.

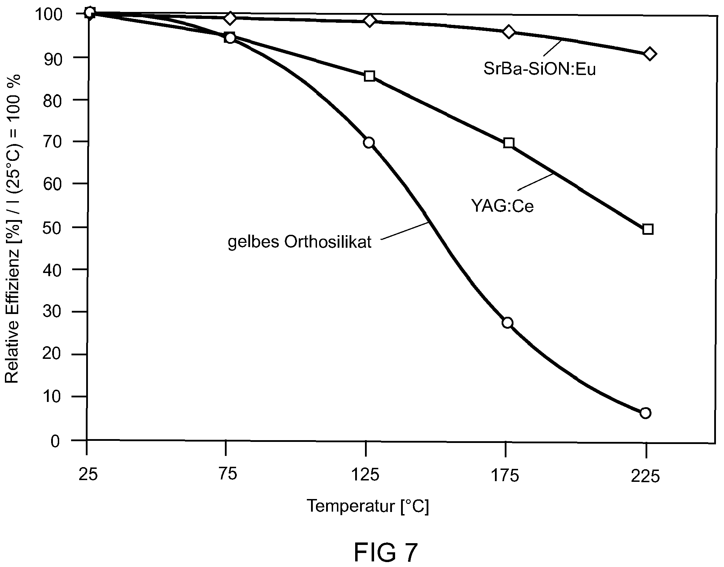

Figur 7 zeigt den Vergleich der Effizienz des erfindungsgemäßen Leuchtstoffs vom Typ Misch-Sion mit dem Stand der Technik (YAG:Ce und (Sr,Ba)-Orthosilikat:Eu) als Funktion der Umgebungstemperatur. Der neue Leuchtstoff ist deutlich temperaturstabiler als der Stand der Technik.

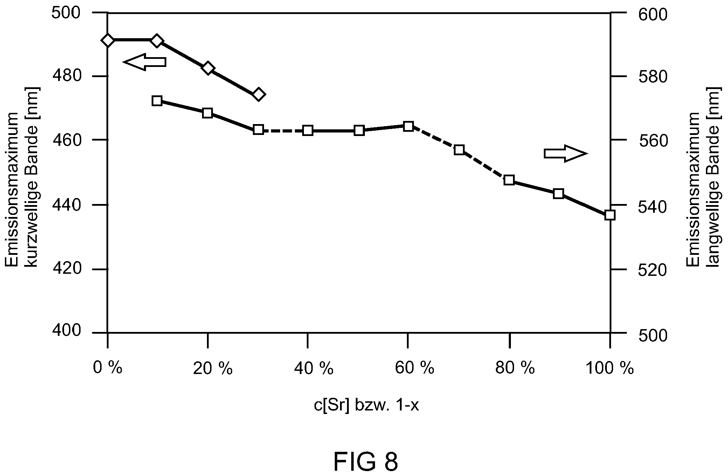

Figur 8 zeigt den Vergleich der Emission verschiedener Misch-Sione bei UV-Anregung mit 400 nm. Für x bis 30 % ist noch eine zweite Bande im Blauen sichtbar. Hohe Effizienzen werden auch bei Blauanregung, typisch bei 440 bis 460 nm, nur bei Zusammensetzungen erreicht, bei denen die bei 400 nm Anregung beobachtete blaue Emission weitgehend unterdrückt ist. Bevorzugt ist ein Anteil f=1-x von (1-x) ≥ 40 %, besonders bevorzugt ist (1-x) ≥ 45 %, wobei bei f jeweils der Eu-Anteil dem Sr-Anteil hinzugerechnet ist, also f = f(Sr,Eu).

Figur 8 zeigt die Verschiebung der Emissionsbanden von BaₓSr₁₋ₓSi₂O₂N₂:Eu(2 %)-Leuchtstoffen. Die blaue Emissionsbande verschwindet bei 1-x > 30 % praktisch vollständig. Zwischen 1-x = 30 % und 1-x = 60% bleibt die Lage der langwelligen Emissionsbande nahezu konstant. Die gestrichelte Linie deutet den Phasenübergangsbereich an. Für höhere Sr-Konzentrationen lässt sich eine Verschiebung der Wellenlänge in Richtung grüne Sr-SiON:Eu- Emission erreichen, ohne dass die Effizienz nachlässt. Die Emissions-Wellenlänge lässt sich daher gut an die jeweiligen Anforderungen anpassen. Für kurzwelligere blaue Primär-LEDs (z.B. 440-450 nm) muss beispielsweise ein etwas kurzwelligerer Leuchtstoff zur Weißerzeugung verwendet werden als im Falle einer langwelligeren blauen Primär-LED (460 nm Peak-Anregung).

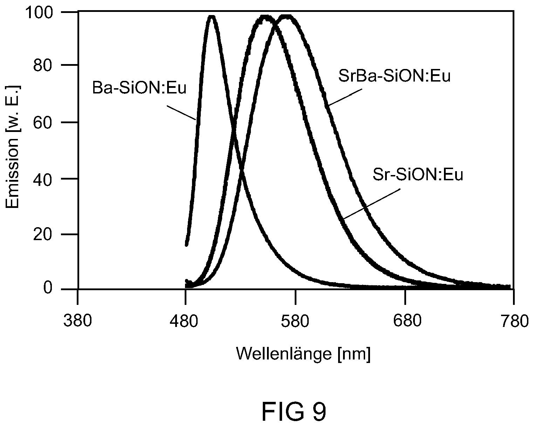

Figur 9: Das Emissionsspektrum der neuartigen Misch-Sione ist deutlich breitbandiger als das von Sr-Sion. Das Misch-Sion eignet sich alleine gut für Farbtemperaturen um 4000 bis 6500 K, bevorzugt 4500 bis 6000 K.

Es lässt sich jedoch auch gut zusammen mit Sr-Sion oder anderen Sionen oder Nitriden wie (Sr,Ca)Si5N8:Eu oder CaAlSiN3:Eu kombinieren. Insbesondere bei Verwendung zusammen mit Sr-Sion wird somit die gesamte Emission je nach Anteil zwischen grün (reines Sr-SiON:Eu) und gelb (neuartiges Misch-Sion SrBa-SiON:Eu) kontinuierlich verschoben. Damit kann insbesondere die Farbe verändert werden. Diese Kombination eignet sich in Verbindung mit einem Rot-Leuchtstoff besonders gut für warmweiße LED mit Farbtemperatur von 2800 bis 3800 K, wobei ein hoher Ra von mindestens 85 erzielt werden kann.

Zur Anpassung des Emissionsverhaltens kann auch ein ternäres Misch-Sion, basierend auf dem Sr-Ba-Sion, verwendet werden. Dafür eignet sich insbesondere Ca in kleinen Mengen. Alternativ kann auch ein anderes zweiwertiges Ion mit ähnlich geringem Ionenradius wie Ca verwendet werden. Ein ähnlich geringer Ionenradius wird insbesondere bei Zugabe von Zn, Mg, Mn und Yb statt oder zusammen mit Ca erzielt. Dabei sollen die Anteile so gering sein, dass die typische Struktur des Misch-Sions erhalten bleibt, und insbesondere der Doppelpeak bei 2 Θ = 31,2° (bezogen auf Cu K α) deutlich zutage tritt.

Die Herstellung des erfindungsgemäßen neuartigen Leuchtstoffs erfolgt erfindungsgemäß über die Orthosilikat-Route. Dabei werden zunächst Carbonate von Sr und von Ba zusammen mit SiO2 und einem Flussmittel wie SrF2 o.ä. sowie einem Eu-Vorläufer intensiv gemischt und homogenisiert. Anschließend wird daraus ein Orthosilikat synthetisiert, indem das Gemisch in einem Al₂O₃-Tiegel unter Formiergas geglüht wird. Diese erfolgt stufenweise über mehrere Stunden bis zu einer Temperatur von etwa 1100 bis 1400 °C. Das Orthosilikat wird anschließend mit Si3N4 gemischt und homogenisiert, und dieses Gemisch wird anschließend in leicht reduzierender Atmosphäre (Ar oder N2 oder H2 oder Mischungen) im Wolfram-Tiegel geglüht. Dabei wird die Temperatur stufenweise über mehrere Stunden auf bis zu 1400 bis 1600 °C angehoben.

Die Herstellung des erfindungsgemäßen neuartigen Leuchtstoffs ist auch über die Carbonat-Route möglich. Vorteilhaft wird dabei abschließend eine saure Washcung vorgenommen um Fremdphasen zu minimieren. Tab. 1 zeigt die Herstellung des Misch-Sions Sr_{0.45}Ba_{0.45}Eu_{0.1}Si₂O₂N₂. Dabei wird für die Vorläufer SrCO3 und BaCO3 eine mittlere Korngröße von etwa 1,6 µm verwendet.

Die Herstellung erfolgt in der Weise, dass zunächst die Ausgangsstoffe SrCO₃ BaCO₃, (oder auch BaSrCO_{3,}), SrF2, Si₃N₄ und SiO₂ intensiv miteinander gemischt werden und die Mischung anschließend im Ofen bei 1400 bis 1600 °C, vorzugsweise in einem nicht-oxidischen Tiegel und insbesondere bei mindestens 1500 °C, unter leicht reduzierender Atmosphäre über 8 Std. geglüht wird. Dabei wird ein im wesentlichen stöchiometrischer Ansatz genommen, siehe die Tab. 1.

Selbstverständlich muss das gezeigte Sion keine exakte Stöchiometrie MSi2O2N2 aufweisen, sondern nur dessen grundsätzliche Formel. Dabei sind auch Abweichungen erlaubt. Ein derartiger Leuchtstoff lässt sich als ein vornehmlich gelb emittierender Oxinitrid-Leuchtstoff beschreiben, mit einer Stöchiometrie :

MSi₂O₂+ _{δ}N_{2-(2/3) δ},

wobei M =(Sr₁₋ₓBaₓ)_{1-c}Eu_{c}

Für δ gilt
1 ≥ δ ≥ -1, vorzugsweise 0.35 ≥ δ ≥ -0.35.

**Tab. 1**

| Substanz | M (g/mol) | Atomanteil | 1/1- Einwaage (g) |
|---|---|---|---|
| SiO₂, | 60,090 | 0,500 | 30,045 |
| Si₃N₄, | 140,283 | 1,500 | 70,142 |
| SrCO₃, | 147,630 | 0,450 | 66,434 |
| BaCO₃, | 197,339 | 0,450 | 88,803 |
| SrF₂, | 125,620 | 0,020 | 2,512 |
| Eu₂O₃, 99.99%, | 351,920 | 0,100 | 17,596 |
| Gesamteinwaage | | | 275,53 |

Eine Analyse des ○- und N-Gehalts ergibt beispielsweise 14,4 Gew.-% ○ und 10,0 Gew.-% N, was nominell einem δ von +0,29 entspricht. Allerdings ist nicht auszuschließen, daß eine Abweichung der gemessenen Werte von der Theorie durch noch in geringem Maße vorhandene Fremdphasen wie insbesondere SiO2 und Si2ON2 beeinflusst ist, so dass im konkreten Fall der wahre Wert von δ bei etwa 0,25 bis 0,35 liegt. Typisch können auch Verunreinigungen kleiner 200 ppm infolge Verunreinigung der Ausgangsmaterialien entstehen. Diese geringen Verunreinigungen verändern aber die Eigenschaften des Leuchtstoffs nicht grundlegend.

Eine qualitativ besonders hochwertige weiße LED mit hohem Ra lässt sich erzielen, wenn das erfindungsgemäße gelbe Misch-Sion zusammen mit weiteren Leuchtstoffen verwendet wird. Diese sollen insbesondere das Spektrum im roten Spektralbereich auffüllen. Geeignete Kandidaten sind hier insbesondere rote Nitride und rote Sulfide wie an sich bekannt. Beispiele sind CaAlSiN3:Eu, und (Sr,Ca,Zn)S:Eu oder auch (Ba,Sr,Ca)2Si5N8:Eu. Außerdem kann ein weiteres Sion wie reines Sr-Sion, das vornehmlich grün emittiert, für die Erzielung eines hohen Ra eingesetzt werden.

In der Tab. 2 ist die Dominanzwellenlänge von reinem Sr-Sion als Funktion des Europium-Dotiergehalts gezeigt. Dies dient als Anhaltspunkt für die erreichbare Verschiebung mittels des Misch-Sions, die bei mindestens 6 nm, häufig mindestens 8 nm, hin zu längeren Wellenlängen liegt.

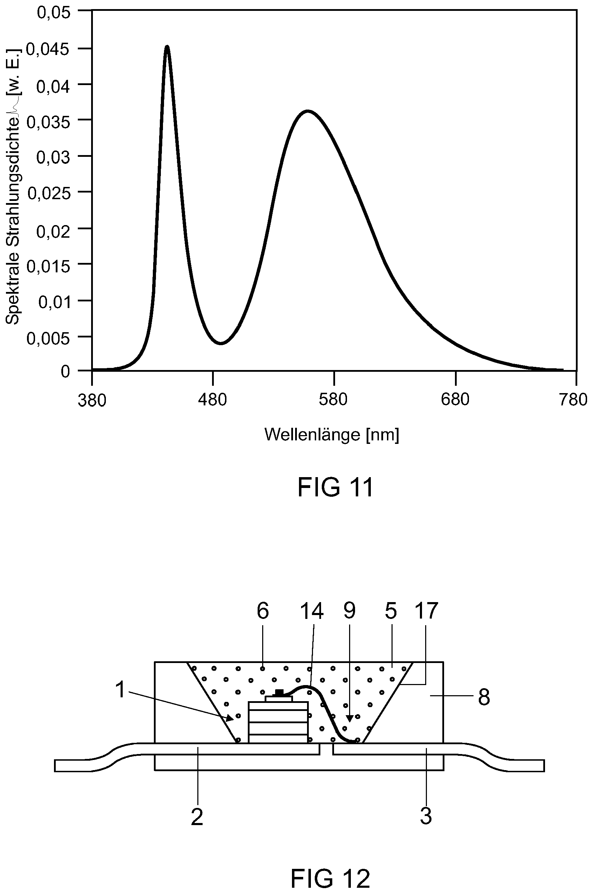

Schließlich zeigt Figur 11 das Spektrum einer weißen LED mit einer Farbtemperatur von 6000 K auf Basis einer im Blauen mit Peakwellenlänge 460 nm emittierenden LED und eines erfindungsgemäßen gelb emittierenden Leuchtstoffs. Beide zusammen mischen sich zu weiß.

In Tab. 3 ist schließlich ein Vergleich verschiedener Daten für wesentliche Leuchtstoffe gezeigt.

Der Aufbau einer Lichtquelle für weißes Licht ist in Figur 12 explizit gezeigt. Die Lichtquelle ist ein Halbleiterbauelement mit einem Chip 1 des Typs InGaN mit einer Peakemissionswellenlänge im UV von beispielsweise 440 nm, das in ein lichtundurchlässiges Grundgehäuse 8 im Bereich einer Ausnehmung 9 eingebettet ist. Der Chip 1 ist über einen Bonddraht 14 mit einem ersten Anschluss 3 und direkt mit einem zweiten elektrischen Anschluss 2 verbunden. Die Ausnehmung 9 ist mit einer Vergussmasse 5 gefüllt, die als Hauptbestandteile ein Epoxidgießharz (80 bis 90 Gew.-%) und Leuchtstoffpigmente 6 (weniger als 20 Gew.-%) enthält. Ein Teil der blauen Primärstrahlung wird von dem gelb emittierenden Leuchtstoff Sr0, 45Ba0, 45Eu0, 1Si2O2N2 absorbiert, so daß insgesamt weißes Licht emittiert wird. Die Ausnehmung hat eine Wand 17, die als Reflektor für die Primär- und Sekundärstrahlung vom Chip 1 bzw. den Pigmenten 6 dient.

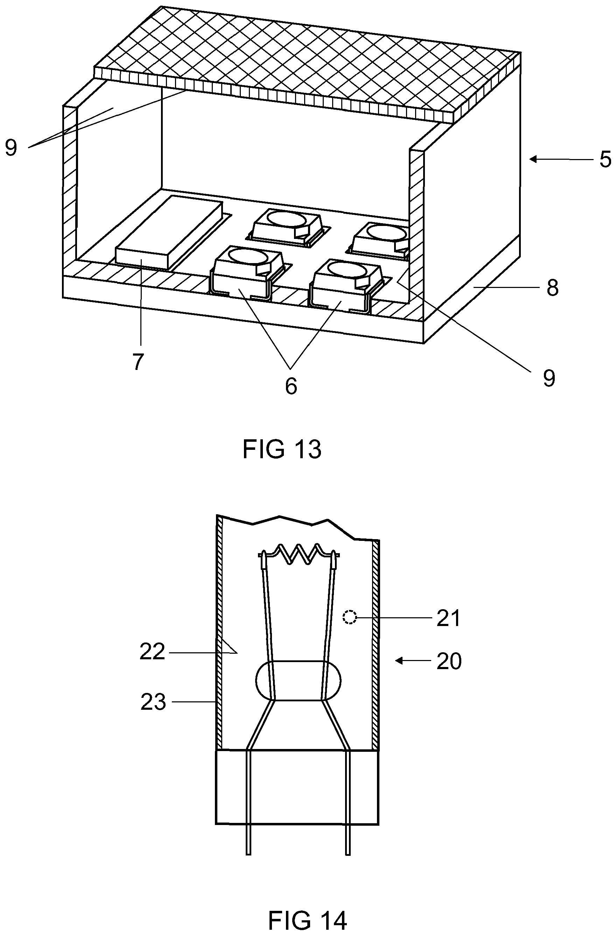

In einem weiteren Ausführungsbeispiel gemäß Fig. 13 wird wieder als Leuchtstoffpigment ein Misch-Sion wie oben erläutert und ein rot emittierendes Nitridosilikat verwendet, insbesondere ein rot emittierendes Nitridosilikat vom Typ CaSrSi5N8:Eu. Jedoch sind diese auf den Wänden 9 eines äußeren Gehäuses angebracht, das mehrere LEDs vom Typ Lumineszenzkonversions-LED enthält.

Figur 14 zeigt eine Niederdruck-Entladungslampe 20 mit einer quecksilberfreien Gasfüllung 21 (schematisiert), die eine Indiumverbindung und ein Puffergas analog WO 02/10374 enthält, wobei eine Schicht 22 aus (Sr,Ba)Si₂O₂N₂:Eu innen am Kolben 23 angebracht ist. Der ganz besondere Vorteil bei dieser Anordnung ist, dass dieses Misch-Sion gut der Indium-Strahlung angepasst ist, weil diese wesentliche Anteile sowohl im UV als auch im blauen Spektralbereich hat, die von diesem Misch-Sion beide gleichermaßen gut absorbiert werden, was ihn bei dieser Verwendung gegen die bisher bekannten Leuchtstoffe überlegen macht. Diese bekannten Leuchtstoffe absorbieren nennenswert entweder nur die UV-Strahlung oder die blaue Strahlung des Indiums, so dass die erfindungsgemäße Indium-Lampe eine deutlich höhere Effizienz zeigt. Diese Aussage gilt auch für eine Indium-Lampe auf Hochdruck-Basis wie an sich aus US 4 810 938 bekannt.

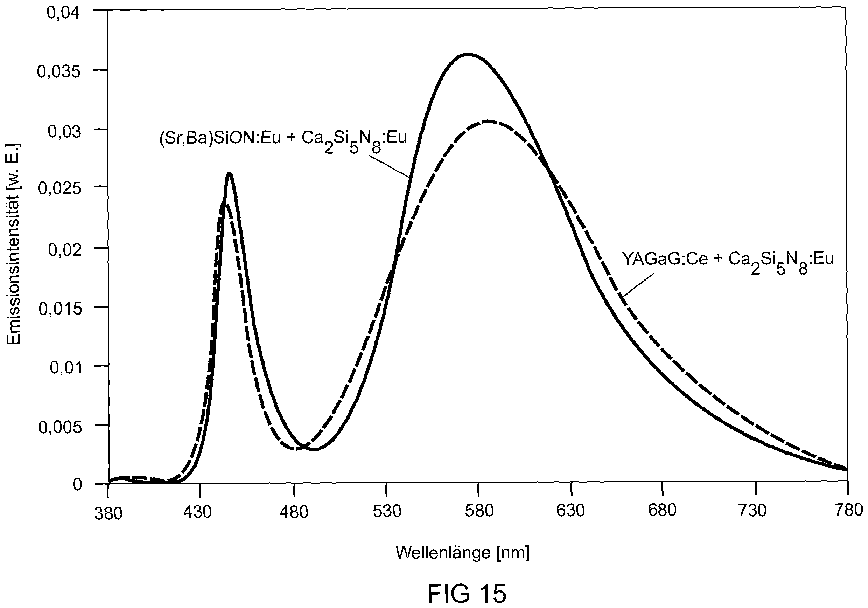

Figur 15 zeigt einen Vergleich zwischen zwei warmweiß wirkenden Leuchtstoff-Systemen. Das bisher beste System ist YAGaG:Ce in Mischung mit Ca2Si5N8:Eu. Mit YAGaG ist Y3(Al,Ga)5O12:Ce gemeint. Der Anteil des Ca-Nitrids beträgt 9,7 Gew.% (33,3 %). Der Nachteil des YAGaG ist seine mangelnde Temperaturbeständigkeit bei sehr hohen Temperaturen. Demgegenüber ist eine Mischung Sr0, 5Ba0, 5Si2O2N2:Eu mit Ca2Si5N8:Eu effizienter. Der Anteil des Ca-Nitrids ist hier mit 9,8 Gew.% (22,7 %) gewählt. Sowohl die reale LED-Effizienz als auch die durch den visuellen Nutzeffekt bestimmte maximale Effizienz, die 351 lm/W gegenüber 324 lm/W beträgt, belegen den Vorteil der neuartigen Mischung.

Tab. 4 zeigt den Einfluss der Verwendung eines Schmelzmittels bei der Herstellung des SrBa-Sions. Gezeigt ist die relative Pulverhelligkeit einer Leuchtstoff-Probe bei Zugabe unterschiedlich großer Mengen des Schmelzmittels (0,01 mol) und deren Weiterbehandlung bei unterschiedlicher Glühtemperatur. Verwendet wurden fünf verschiedene Schmelzmittel im Vergleich zu einer Probe ohne Schmelzmittel. Die Glühtemperatur variierte zwischen 1400 und 1500 °C. Es zeigt sich, dass je nach Schmelzmittel eine andere Glühtemperatur bessere Ergebnisse liefert.

Tab. 5 zeigt den Einfluss unterschiedlicher Konzentrationen an BaF2 als Schmelzmittel. Gezeigt ist eine Messreihe zwischen 0 und 0,05 mol BaF2. es zeigt sich, dass die Glühtemperatur für BaF2 unter 1550 °C liegen sollte und dass je nach Temperatur eine andere Konzentration an BaF2 zu wählen ist. insgesamt lässt sich mit einem derartigen Schmelzmittel die Pulverhelligkeit verbessern.

Ein ähnliches Verhalten zeigt sich bei Verwendung von SrCl2 als Schmelzmittel. Auch hier zeigt sich, dass die Glühtemperatur für SrC12 unter 1550 °C liegen sollte und dass je nach Temperatur eine andere Konzentration an SrCl2 zu wählen ist. Insgesamt lässt sich auch mit diesem Schmelzmittel die Pulverhelligkeit verbessern.

**Tab. 2**

| Eu-Konzentration c | Dominanzwellenlänge (nm) |
|---|---|
| 1 % | 554 |
| 2 % | 555 |
| 5 % | 558 |
| 10 % | 563 |
| 20 % | 567 |

**Tab. 3**

| Leuchtstoff | λ_dom [nm] | Vs | Rel. QE bei 25 °C | Qth = Eff.(175°C)/ Eff.(25°C) |
|---|---|---|---|---|
| SrSi₂O₂N₂: Eu | 563 | 0,763 | 96% | 0,91 |
| Sr_{0,5}Ba_{0,5}Si₂O₂N₂: Eu | 573 | 0,693 | 100% | 0,96 |
| BaSi₂O₂N₂: Eu | 502 | 0,401 | 64% | 0,52 |
| YAG:Ce | 573 | 0,624 | 102% | 0,71 |
| (Sr,Ba)₂SiO₄:Eu | 571 | 0,699 | 98% | 0,28 |

**Tab. 4**

| | | **Schmelzmittel (0,01 mol)** | | | | | |
|---|---|---|---|---|---|---|---|
| **relative Pulver helligkeit** | | **ohne** | **SrF2** | **BaF2** | **SrCl2** | **NH4HF2** | **H3BO3** |
| **Temperatur** | 1400°C | 100.0 | 124.9 | 122.4 | 121.2 | 128.0 | 105.8 |
| | 1450°C | 116.1 | 127.0 | 123.6 | 124.6 | 125.2 | 109.0 |
| | 1500°C | 120.9 | 124.8 | 123.0 | 128.0 | 118.8 | 117.3 |

**Tab. 5**

| | **Schmelzmittel BaF2 (mol)** | | | | | |
|---|---|---|---|---|---|---|
| **relative Pulver helligkeit** | | **0** | **0,005** | **0,01** | **0,05** | |
| **Temperatur** | 1400°C | 100.0 | 116.9 | 122.4 | 119.0 | |
| | 1450°C | 116.1 | 122.9 | 119.0 | 101.8 | |
| | 1500°C | 120.9 | 118.1 | 123.0 | 102.9 | |
| | 1550°C | 47.8 | 62.4 | 72.3 | 67.4 | |

**Tab. 6**

| | | **Schmelzmittel SrCl2 (mol)** | | | | | |
|---|---|---|---|---|---|---|---|
| **relative Pulver helligkeit** | | **0** | **0,01** | **0,02** | **0,03** | **0,04** | **0,05** |
| **Temperatur** | 1400°C | 100.0 | 121.2 | 122.3 | 125.2 | 124.7 | 125.3 |
| | 1450°C | 116.1 | 124.6 | 124.1 | 128.8 | 127.0 | 125.7 |
| | 1500°C | 120.9 | 128.0 | 126.9 | 128.2 | 128.0 | 123.7 |
| | 1550°C | 47.8 | 65.7 | 68.9 | 54.1 | 58.8 | 48.7 |

## Patentansprüche

1. Hocheffizienter Leuchtstoff aus der Klasse der Oxinitridosilikate mit einem Kation M2+ und der grundsätzlichen Formel M_{(1-c)}Si₂O₂N₂:D_{c}, wobei M2+ als Bestandteil Sr2+ und Ba2+ gleichzeitig enthält, und wobei D eine zweiwertige Dotierung mit zumindest Europium ist, **dadurch gekennzeichnet, dass** für M = Sr₍₁₋ₓ₎Baₓ mit 0,45 ≤ x ≤ 0,55 verwendet wird, wobei das Oxinitridosilikat vollständig oder überwiegend aus einer Phase besteht, die weder der von reinem Sr-Sion noch der von reinem Ba-Sion entspricht, wobei die Dominanzwellenlänge des Misch-Sions bei gegebenem Dotiergehalt um mindestens 6 nm, bevorzugt um mindestens 8 nm, gegenüber der Dominanzwellenlänge des reinen Sr-Sions mit gleichem Dotiergehalt zu längeren Wellenlängen hin verschoben ist, wobei der Anteil c des Eu am Kation M2+ mindestens 5 Mol.-% ausmacht.

2. Leuchtstoff nach Anspruch 1, **dadurch gekennzeichnet, dass** der Anteil c des Eu 5 bis 12 mol-% von M2+ ausmacht.

3. Leuchtstoff nach Anspruch 1, **dadurch gekennzeichnet, dass** das Verhältnis Sr/Ba gleich eins ist.

4. Leuchtstoff nach Anspruch 1, **dadurch gekennzeichnet, dass** x = 0,5 und der Anteil c des Eu 10 mol-% von M2+ ausmacht.

5. Lichtquelle mit Leuchtstoff nach Anspruch 1, **dadurch gekennzeichnet, dass** die Lichtquelle eine LED ist.

6. Verfahren zur Herstellung eines Misch-Sions gemäß einem der vorhergehenden Ansprüche 1 bis 4, **dadurch gekennzeichnet, dass** in einem ersten Schritt Carbonate von Sr und von Ba zusammen mit SiO2 und einem Flussmittel sowie einem Eu-Vorläufer intensiv gemischt werden und daraus ein Orthosilikat synthetisiert wird, und dass dieses Orthosilikat anschließend in einem zweiten Schritt mit Si3N4 gemischt wird und dieses Gemisch anschließend in leicht reduzierender Atmosphäre geglüht wird.

7. Verfahren nach Anspruch 6, **dadurch gekennzeichnet, dass** bei der Herstellung ein Schmelzmittel verwendet wird.

## Claims

1. A high-efficiency phosphor from the class of the oxynitridosilicates with a cation M²⁺ and the empirical formula M_{(1-c)}Si₂O₂N₂:D_{c}, where M²⁺ simultaneously contains as constituent Sr²⁺ and Ba²⁺, and where D is a divalent doping with at least europium, **characterized in that** M = Sr₍ₗ₋ₓ₎Baₓ, with 0.45 ≤ x ≤ 0.55, is used, wherein the oxynitridosilicate completely or predominantly consists of a phase, which corresponds neither to that of pure Sr sion nor that of pure Ba sion, the dominant wavelength of the mixed sion with a given doping content being shifted by at least 6 nm, preferably at least 8 nm, towards longer wavelengths with respect to the dominant wavelength of the pure Sr sion phase with the same doping content, wherein the content c of Eu of the cation M²⁺ is at least 5 mol-%.

2. The phosphor according to claim 1, **characterized in that** the content c of Eu makes up from 5 to 12 mol-% of M²⁺.

3. The phosphor of claim 1, **characterized in that** the ratio Sr/Ba is one.

4. The phosphor of claim 1, **characterized in that** x = 0.5 and the content c of Eu is 10 mol-% of M²⁺.

5. Light source with a phosphor according to claim 1, **characterized in that** the light source is an LED.

6. A process of making a mixed sion according to any one of claims 1 to 4, **characterized in that** in a first step carbonates of Sr and of Ba are mixed intensively together with SiO₂ and a flux as well as a Eu precursor, and from this an orthosilicate is synthesized, and that the orthosilicate is then mixed with Si₃N₄ in a second step, and this mixture is subsequently annealed in a slightly reducing atmosphere.

7. The process according to claim 6, **characterized in that** a sintering aid is employed during the making of the mixed sion.

## Revendications

1. Substance luminescente à haut rendement de la catégorie des silicates d'oxynitrure dotée d'un cation M2+ et de formule fondamentale M_{(1-c)}Si₂O₂N₂:D_{c}, M2+ comprenant comme composante Sr2+ et Ba2+ en même temps, et D étant un dopage bivalent à au moins l'europium, **caractérisée en ce qu'**est utilisé M = Sr₍₁₋ₓ₎Baₓ avec 0,45 ≤ x ≤ 0,55, le silicate d'oxynitrure étant constitué entièrement ou essentiellement d'une phase qui ne correspond ni à celle du Sr-SiON pur ni à celle du Ba-SiON pur, la longueur d'onde dominante du SiON mixte se décalant pour une teneur de dopage déterminée, de 6 nm minimum, de préférence de 8 nm minimum, par rapport à la longueur d'onde dominante du Sr-SiON pur à teneur de dopage identique, vers des longueurs d'ondes plus longues, la proportion c de l'Eu dans le cation M2+ représentant au moins 5 moles %.

2. Substance luminescente selon la revendication 1, **caractérisée en ce que** la proportion c de l'Eu représente 5 à 12 moles % de M2+.

3. Substance luminescente selon la revendication 1, **caractérisée en ce que** le rapport Sr/Ba est égal à un.

4. Substance luminescente selon la revendication 1, **caractérisée en ce que** x = 0,5 et que la proportion c de l'Eu représente 10 moles % de M2+.

5. Source lumineuse à substance luminescente selon la revendication 1, **caractérisée en ce que** la source lumineuse est une DEL.

6. Procédé de production d'un SiON mixte selon l'une quelconque des revendications précédentes 1 à 4, **caractérisé en ce que** dans une première étape, des carbonates de Sr et de Ba sont mélangés intensément à du SiO2 et à un flux ainsi qu'à une cellule progénitrice d'Eu, et qu'un orthosilicate est synthétisé à partir de cela, et que ledit orthosilicate est ensuite mélangé, dans une deuxième étape, à du Si3N4 et que ce mélange est ensuite recuit dans une atmosphère légèrement réductrice.

7. Procédé selon la revendication 6, **caractérisé en ce qu'**est utilisé un fondant lors de ladite production.
